# EUROPEAN PATENT APPLICATION

(11) **EP 1 422 704 A1**
(43) Date of publication of application: **26.05.2004**
(21) Application number: 02755708.1
(22) Date of filing: 31.07.2002
(51) Int. Cl.: G11B 7/26, G11B 7/24

(54) **OPTICAL RECORDING MEDIUM AND MANUFACTURING METHOD THEREOF**

(30) Priority: 10.08.2001 JP 2001244074; 10.08.2001 JP 2001244067; 16.11.2001 JP 2001351713
(71) Applicant: TDK Corporation, Chuo-ku, Tokyo 103-8272 (JP)
(72) Inventor: TANAKA, Toshifumi, TDK Corporation, Tokyo 103-8272 (JP); SUZAWA, Kazuki, TDK Corporation, Tokyo 103-8272 (JP)
(74) Representative: von Fischern, Bernhard, Dipl.-Ing.
(86) International application number: PCT/JP2002/007780
(87) International publication number: WO 2003/017268

(57) **Abstract**

It is an object of the present invention to provide a method of manufacturing optical recording media whereby defective discs can be effectively eliminated without greatly reducing yield.

The present invention is a method of manufacturing an optical recording medium comprising at least a light transmission layer 3 and a recording layer 2 whereby data is played back and/or recorded by projecting a laser beam onto said recording layer 2 via the light transmission layer 3, wherein the optical recording medium manufacturing method comprises at least an inspection process for detecting internal defects contained within the light transmission layer 3. In the inspection process, different values are set as the critical value for internal defects in a first direction and as the critical value in a second direction different from the first direction. In this manner, the critical values for the size of internal defects are defined separately in each of the two directions, so by setting these critical values appropriately it is possible to effectively eliminate defective discs without greatly reducing yield.

## Description

### BACKGROUND OF THE INVENTION

The present invention relates to an optical recording medium and particularly to an optical recording medium having a thin light transmission layer. The present invention also relates to a method of manufacturing optical recording media and particularly to a method of manufacturing optical recording media having a thin light transmission layer.

### DESCRIPTION OF THE PRIOR ART

In recent years, optical recording media such as the CD, DVD and the like have been widely used as recording media for recording digital data. When data is played back from such optical recording media, the so-called error correction process is performed and if the data thus played back contains errors they are corrected to restore the correct data. The level of errors that can be corrected by the error correction process is different depending on the algorithm, but if the data contains a greater level of errors, then error correction is impossible so compensating data is generated using adjacent data from before or after.

One major cause of such data errors occurring is the presence of defects contained in a light transmission layer within the optical recording media. Examples of defects contained in the light transmission layer include entrained foreign matter, generated bubbles or the like. The level of errors occurring in the data is typically higher the larger the size of the defects. For this reason, a stipulated size tolerance (critical value) is established for defects contained in the light transmission layer in order to prevent a high level of errors that cannot be corrected by the error correction process, so in the event that the light transmission layer contains defects exceeding this size, that optical recording medium is handled as a reject.

If the maximum size of a defect contained in the light transmission layer exceeds the stipulated value in the error correction process, the probability of error correction becoming impossible typically increases rapidly. For this reason, at the time of the manufacture of optical recording media, the critical value for the size of defects contained in the light transmission layer is conventionally set to match this stipulated value, so if the light transmission layer contains defects of a size that exceeds the critical value, that optical recording medium is normally handled as a reject.

However, in recent years, technology intended to record even larger amounts of digital data by making the light transmission layer of the optical recording media extremely thin and setting the distance from the surface of the optical recording media to the objective lens used to focus laser beam used to play back data (the working distance) extremely short has attracted attention. If the light transmission layer is made thin and the working distance is set to be short in this manner, it is possible to make the effective spot of laser beam very much smaller than before, so even higher recording densities can be achieved.

However, as a result of making the light transmission layer thinner, if its thickness becomes close to the size of defects at which the probability of error correction becomes impossible in the error correction process, or becomes even thinner, then if the critical value for defects contained in the light transmission layer is set to the same size as the size of defects that at which the probability of error correction becomes impossible in the error correction process, then even optical recording media in which a defect protrudes significantly from the surface may be handled as good (non-defective). Because the working distance used in playing back data from this type of optical recording media is set extremely short, if such optical recording media in which a defect protrudes significantly from the surface is handled as good, then there is a risk of the protruding defect coming into contact with the objective lens or the support which supports it.

In order to prevent this, it is effective to set the critical value for defects contained within the light transmission layer smaller than the size of defects at which the probability of error correction becoming impossible in the error correction process increases. For example, if the thickness of the light transmission layer is thinner than the size of defects at which the probability of error correction becoming impossible in the error correction process increases, if the critical value for the size of defects contained in the light transmission layer is set to below the thickness of the light transmission layer, then the probability of optical recording media in which a defect protrudes significantly from the surface being handled as good becomes extremely low.

However, the smaller the critical value for the size of defects contained in the light transmission layer is set, the greater the proportion of the optical recording media that are handled as defective becomes and this proportion increases rapidly, leading to the problem of the yield rapidly worsening.

Because of this, in the process of manufacturing optical recording media, it had been extremely difficult to eliminate optical recording media in which a defect protrudes significantly from the surface without greatly reducing yield. For this reason, it had been desirable to provide an optical recording medium that does not greatly reduce yield.

### SUMMARY OF THE INVENTION

Accordingly, an object of the present invention is to provide an optical recording medium whereby the yield at the time of manufacture is not greatly reduced.

Another object of the present invention is to provide an optical recording medium whereby defects protruding from the surface of the light transmission layer are reduced.

A further object of the present invention is to provide an improved optical recording medium having a thin light transmission layer.

A further object of the present invention is to provide an improved optical recording medium wherein the thickness of the light transmission layer is thinner than the size of defects giving rise to errors of a level that cannot be corrected in the error correction process.

A further object of the present invention is to provide an optical recording medium manufacturing method whereby defective discs can be effectively eliminated without greatly reducing yield.

A further object of the present invention is to provide an optical recording medium manufacturing method whereby optical recording media with defects protruding significantly from the surface of the light transmission layer can be effectively eliminated.

A further object of the present invention is to provide an improved method of manufacturing optical recording media with a thin light transmission layer.

A further object of the present invention is to provide an improved method of manufacturing optical recording media wherein the thickness of the light transmission layer is thinner than the size of defects giving rise to errors of a level that cannot be corrected in the error correction process.

In a method of manufacturing an optical recording medium comprising at least a light transmission layer and a recording layer whereby data is played back and/or recorded by projecting a laser beam onto said recording layer via said light transmission layer, the optical recording medium manufacturing method according to the present invention comprises at least an inspection process for detecting internal defects contained within said light transmission layer, and in said inspection process, different values are set as the critical value for said internal defects in a first direction and as the critical value in a second direction different from said first direction.

With the present invention, the critical values for the size of internal defects are set individually for two different directions, so by appropriately setting these critical values, it is possible to effectively eliminate defective discs without greatly reducing the yield.

In an optical recording medium comprising at least a light transmission layer and a recording layer whereby data is played back and/or recorded by projecting a laser beam onto said recording layer via said light transmission layer, the optical recording medium according to the present invention is such that the length in a first direction of a first largest internal defect that has the maximum length in that direction of all of the internal defects contained within said light transmission layer is longer than the length in a second direction of a second largest internal defect that has the maximum length in that direction of all of the internal defects contained within said light transmission layer.

In addition, in an optical recording medium comprising at least a light transmission layer and a recording layer whereby data is played back and/or recorded by projecting a laser beam onto said recording layer via said light transmission layer, the optical recording medium according to the present invention is such that the length tolerance for an internal defect contained within said light transmission layer is longer in a first direction than in a second direction different from said first direction.

With the present invention, the length in the first direction of the first largest internal defect is longer than the length in the second direction of the second largest internal defect, so the yield at the time of manufacture is not reduced.

In a preferred embodiment of the present invention, said first direction is a direction substantially perpendicular to the optical axis of said laser beam, and said second direction is a direction substantially parallel to the optical axis of said laser beam.

In a further preferred embodiment of the present invention, the critical value in said first direction is greater than the critical value in said second direction.

Here, the critical value in said first direction is preferably within a range from approximately 30 µm to approximately 500 µm, more preferably within a range from approximately 40 µm to approximately 300 µm, and even more preferably within a range from approximately 50 µm to approximately 200 µm, and particularly preferably approximately 200 µm.

In addition, the critical value in said second direction is preferably within a range from approximately 10 µm to approximately 220 µm, more preferably within a range from approximately 30 µm to approximately 200 µm, even more preferably within a range from approximately 50 µm to approximately 100 µm, and particularly preferably approximately 100 µm.

In another preferred embodiment of the present invention, the critical value in said second direction is larger than the thickness of said light transmission layer.

In a further preferred embodiment of the present invention, the thickness of said light transmission layer is approximately 100 µm.

In a method of manufacturing an optical recording medium comprising at least a light transmission layer and a recording layer whereby data is played back and/or recorded by projecting a laser beam onto said recording layer via said light transmission layer, the optical recording medium manufacturing method according to the present invention comprises at least a protruding defect inspection process for detecting protruding defects that adhere to said light transmission layer or that protrude from said light transmission layer.

With the present invention, it is possible to effectively eliminate optical recording media in which a defect protrudes significantly from the surface without greatly reducing yield, so it is possible to eliminate optical recording media with a high risk of the protruding defect coming into contact with the objective lens or the support which supports it. Thus, it is particularly suited to the manufacture of optical recording media wherein the working distance is set to be short while the data is recorded/played back.

In a method of manufacturing an optical recording medium comprising at least a light transmission layer and a recording layer whereby data is played back and/or recorded by projecting a laser beam onto said recording layer via said light transmission layer, the optical recording medium manufacturing method according to the present invention comprises at least a protruding defect inspection process for detecting protruding defects that adhere to said light transmission layer or that protrude from said light transmission layer, and in said inspection process, different values are set as the critical value for said protruding defects in a first direction and as the critical value in a second direction different from said first direction.

With the present invention, it is possible to effectively eliminate defective discs with a high probability of a protruding defect coming into contact with (crashing into) the objective lens or the support which supports it, and also, it is possible to effectively eliminate defective discs that may give rise to errors on a level that cannot be corrected in the error correction process without greatly reducing yield.

In an optical recording medium comprising at least a light transmission layer and a recording layer whereby data is played back and/or recorded by projecting a laser beam onto said recording layer via said light transmission layer, the optical recording medium according to the present invention is such that, among the protruding defects adhering to said light transmission layer or protruding from said light transmission layer, the largest protruding defect, whose height from said light transmission layer is largest, has a height between approximately 1 µm and approximately 120 µm.

With the present invention, the height of protruding defects is controlled, so the probability of these defects coming into contact with the objective lens or the support which supports it during the recording or playback of data is greatly reduced. Thus, it is particularly suited to the manufacture of optical recording media wherein the working distance is set to be short while the data is recorded/played back.

In a preferred embodiment of the present invention, the thickness of said light transmission layer is 50-150 µm.

Here, the critical value for the height of protruding defects is preferably within a range from approximately 1 µm to approximately 120 µm, more preferably within a range from approximately 2 µm to approximately 100 µm and even more preferably within a range from approximately 5 µm to approximately 50 µm.

In a further preferred embodiment of the present invention, the method further comprises an internal defect inspection process for detecting internal defects contained within said light transmission layer, and in said internal defect inspection process, different values are set as the critical value for said internal defects in a first direction and as the critical value in a second direction different from said first direction.

With this further preferred embodiment of the present invention, the critical values for the internal defect size are set individually for each of the two directions, and by appropriately setting these critical values, it is possible to effectively eliminate defective discs without greatly reducing the yield.

In a preferred embodiment of the present invention, said first direction is a direction substantially perpendicular to the optical axis of said laser beam, and said second direction is a direction substantially parallel to the optical axis of said laser beam.

In a further preferred embodiment of the present invention, the critical value in said first direction is greater than the critical value in said second direction.

In a further preferred embodiment of the present invention, the thickness of said light transmission layer is 50-150 µm.

### BRIEF DESCRIPTION OF THE DRAWINGS

Figure 1 is a schematic flowchart illustrating a film formation process.
Figure 2 is a schematic cross section of the structure of an optical recording medium fabricated by means of a film formation process.
Figure 3 is a schematic flowchart illustrating an inspection process.
Figures 4(a)-(d) are partial cross sections of optical recording media, each of which having one of the protruding defects 11-14.
Figure 5(a) is a partial top view of an optical recording medium which has an internal defect 21, while Figure 5(b) is a partial cross section thereof.
Figure 6(a) is a partial top view of an optical recording medium which has an internal defect 22, while Figure 6(b) is a partial cross section thereof.
Figure 7(a) is a partial top view of an optical recording medium which has an internal defect 23, while Figure 7(b) is a partial cross section thereof.
Figure 8(a) is a partial top view of an optical recording medium which has an internal defect 24, while Figure 8(b) is a partial cross section thereof.
Figure 9 is a schematic flowchart illustrating another preferable inspection process according to the present invention.
Figure 10 is a schematic flowchart illustrating still another preferable inspection process according to the present invention.

### DESCRIPTION OF THE PREFERRED EMBODIMENTS

Preferred embodiments of the present invention will be explained with reference to the drawings.

The optical recording medium manufacturing method according to a preferred embodiment of the present invention is broadly divided into a film formation process and an inspection process. The film formation process is a process for forming a plurality of layers constituting the optical recording medium, while the inspection process is a process of inspecting the optical recording medium fabricated in the film formation process for defects. Here follows a description of these processes.

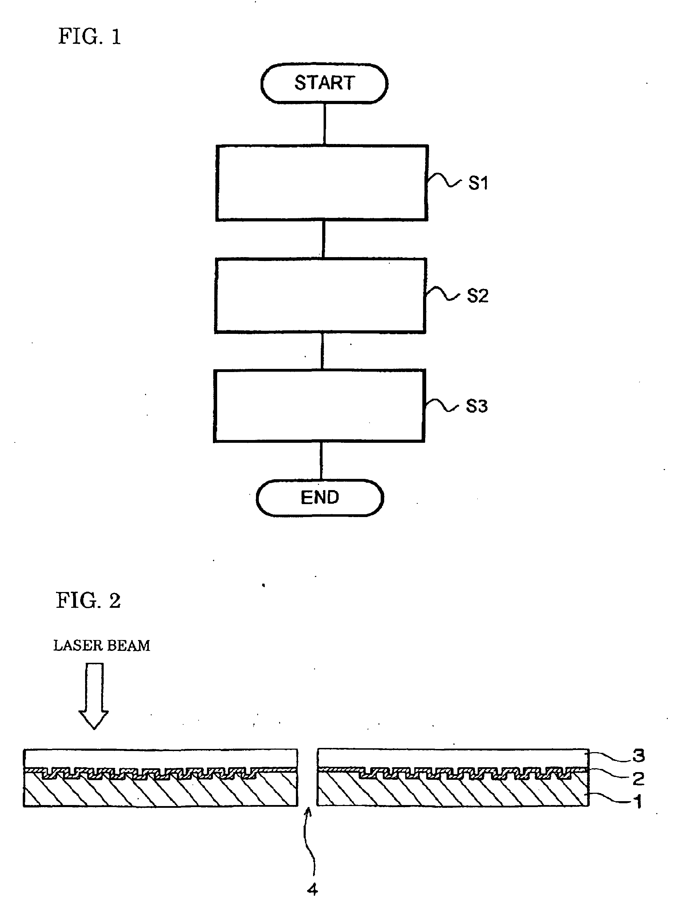

Figure 1 is a schematic flowchart illustrating the film formation process.

As shown in Figure 1, in the film formation process, first, a substrate 1 is fabricated with a groove provided on one surface and a center hole 4 provided in its center (Step S1). Here, the substrate 1 can be fabricated using a mold fitted with a stamper provided with indentations and projections corresponding to the groove and injecting molten material into this mold. The material used for the substrate 1 is not particularly limited, but polycarbonate is preferable. Here, the thickness of the substrate 1 is not particularly limited but it is set to approximately 1.1 mm in this preferred embodiment.

Next, a recording layer 2 is formed on the surface of this substrate 1 on which the groove is provided (Step S2). The sputtering method is preferably used to form the recording layer 2. In addition, the composition of the recording layer 2 is not particularly limited, but it preferably has a multi-layer composition including at least a phase change film. In this case, a dielectric film is preferably included as a protective film for the phase change film. However, it is not mandatory for the recording layer 2 to include a phase change film, but rather the composition may include various known recordable layers, and it may also be a read-only recording layer recorded with information in advance. Here, the thickness of the recording layer 2 is not particularly limited but it is set to approximately 40 nm in this preferred embodiment.

Next, a light transmission layer 3 is formed upon the recording layer 2 (Step S3). The material used for the light transmission layer 3 is not particularly limited, but it is preferable to use ultraviolet curable resin which is preferably formed by the spin coating process. In addition, the light transmission layer 3 may have a single-layer construction or it may have a multi-layer construction with a hard-coat film. Here, the thickness of the light transmission layer 3 is not particularly limited, but in this preferred embodiment it is set to 50-150 µm and preferably 100 µm.

Figure 2 is a schematic cross section of the structure of an optical recording medium fabricated by means of the film formation process described above.

As shown in Figure 2, the optical recording medium fabricated by the film formation process described above can be used to play back and/or record data by projecting a laser beam from the side on which the light transmission layer 3 is formed in a direction substantially perpendicularly to the recording layer 2. The laser beam used to play back and/or record data on this optical recording medium is not particularly limited, but laser beam with a wavelength of approximately 405 nm may be used, for example.

With an optical recording medium having such a structure, in order to perform high-density recording, it is necessary to set the NA (numerical aperture) of the objective lens used to focus laser beam to 0.8 or greater, for example, make the effective spot of laser beam projected onto the recording layer 2 extremely small, make the thickness of the light transmission layer 3 extremely thin (approximately 100 µm) as described above, and also set the distance to the surface of the optical recording medium (the working distance) extremely short, for example, approximately 130 µm.

Here follows a description of the inspection process.

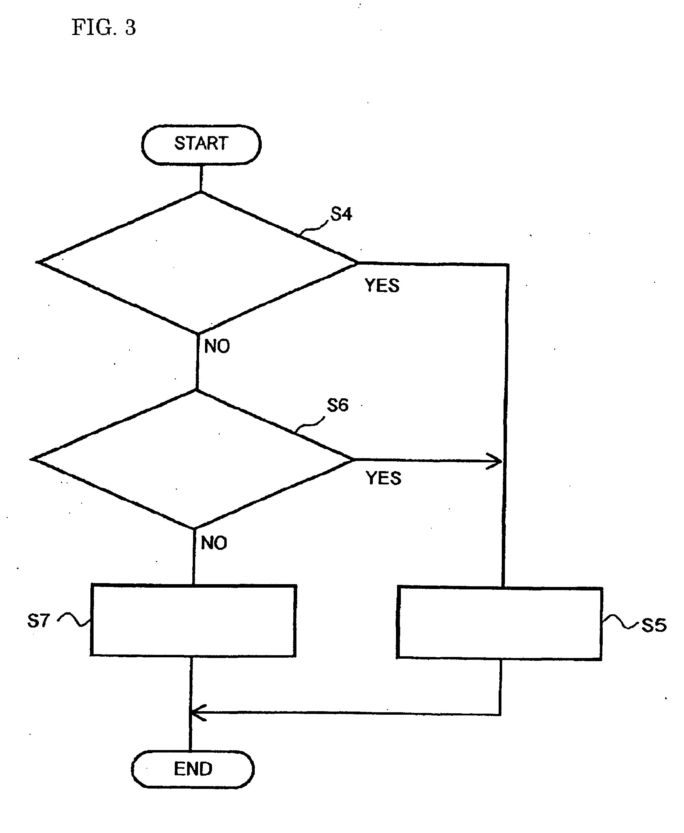

Figure 3 is a schematic flowchart illustrating the inspection process.

As shown in Figure 3, in the inspection process, an inspection is first performed to determine the presence of any defects protruding from the light transmission layer 3 (protruding defects) where the height of the protruding part exceeds a first critical value (Step S4). Here, a defect is defined to be a foreign object present in the light transmission layer 3, bubble generated or entrained in the interior of the light transmission layer 3, or any other element that impedes the passage of laser beam straight through the light transmission layer 3. In the event that a protruding defect exceeding the first critical value is determined to be present as a result of this inspection, that optical recording medium is handled as defective (Step S5). Note that the inspection for protruding defects in Step S4 may be performed using a surface shape measurement microscope, although this is not a particular limitation.

Considering that the working distance is approximately 130 µm, the first critical value is preferably selected within the range from approximately 1 µm to approximately 120 µm. If the first critical value is set to less than 1 µm, then the presence of protruding defects of a level that does not actually affect the playback and/or recording of data will cause optical recording media to be handled as defective, leading to the risk of excessively degrading yield. If the first critical value is set to a value in excess of 120 µm, then there is a risk that optical recording media with a high probability of a protruding defect coming into contact with (crashing into) the objective lens or the support which supports it due to fluctuations in the working distance during actual use being handled as good (non-defective). In addition, the first critical value is preferably selected within a range from approximately 2 µm to approximately 100 µm. If the first critical value is selected within this range, it is possible to effectively prevent the occurrence of crashes while also improving yield. Moreover, it is particularly preferable to select the first critical value within a range from approximately 5 µm to approximately 50 µm. If the first critical value is selected within this range, it is possible to prevent the occurrence of crashes even more effectively while also improving yield even more.

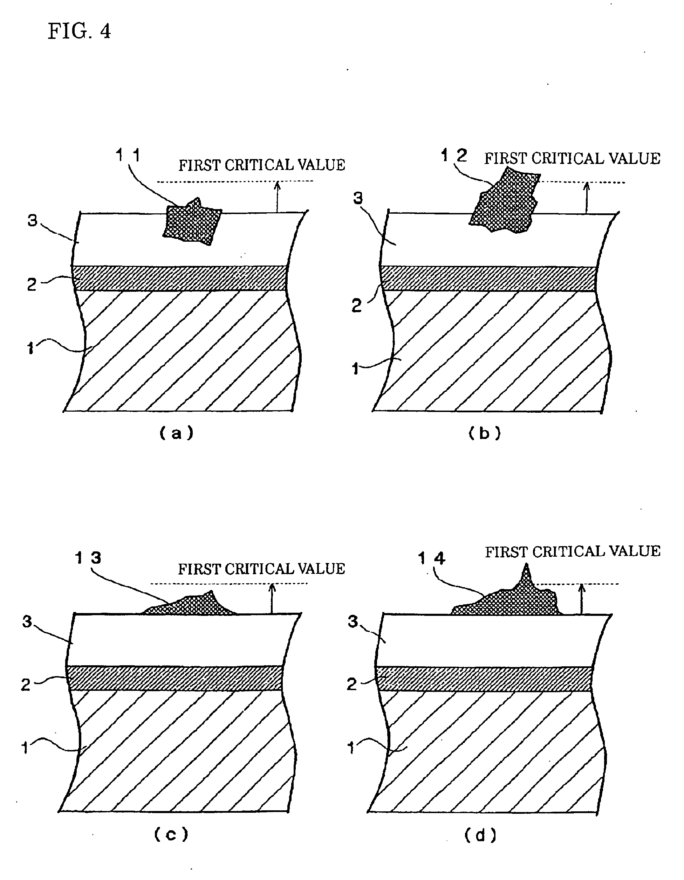

Figures 4(a)-(d) are partial cross sections of optical recording media, each of which having one of the protruding defects 11-14.

Protruding defect 11 shown in Figure 4(a) is partially buried in the light transmission layer 3 while the remaining portion protrudes from the surface of the optical recording medium. However, the height of the protruding defect 11 shown in Figure 4(a) is less than the first critical value, so there is no basis for determining that optical recording medium to be defective in Step S4.

Protruding defect 12 shown in Figure 4(b) is also partially buried in the light transmission layer 3 while the remaining portion protrudes from the surface of the optical recording medium, but the height of this protruding defect 12 exceeds the first critical value, so that optical recording medium is determined to be defective in Step S4.

On the other hand, protruding defect 13 shown in Figure 4(c) is not buried in light transmission layer 3 but rather it adheres to the surface of the light transmission layer 3. However, the height of the protruding defect 13 shown in Figure 4(c) is less than the first critical value, so there is no basis for determining that optical recording medium to be defective in Step S4.

Protruding defect 14 shown in Figure 4(d) is also not buried in light transmission layer 3 but rather it adheres to the surface of the light transmission layer 3, but the height of this protruding defect 12 exceeds the first critical value, so that optical recording medium is determined to be defective in Step S4.

If no protruding defects exceeding the first critical value are determined to be present in Step S4, next, an inspection is performed to determine the presence of any defects partially or completely buried in the light transmission layer 3 (internal defects) where the internal defect exceeds a second critical value or third critical value (Step S6). In the event that an internal defect exceeding at least one of the second or third critical value is determined to be present as a result of this inspection, that optical recording medium is handled as defective (Step S5). Note that the inspection for internal defects in Step S6 may be performed by projecting a laser beam used for inspection onto the light transmission layer 3 from an oblique direction and measuring the amount of light reflected, although this is not a particular limitation.

Here, the second critical value is the critical value for the length of internal defects, being the critical value for length in a direction perpendicular to the optic axis of the laser beam (a direction parallel to the surface of the optical recording medium). On the other hand, the third critical value is similarly defined to be the length of internal defects, but the critical value for length in a direction parallel to the optic axis of the laser beam (a direction perpendicular to the surface of the optical recording medium). In this manner, the critical values for the size of internal defects are defined separately in each of the two directions.

Here, the second and third critical values are preferably set in consideration of the size of a defect that increases the probability of errors that are uncorrectable by the error correction process. Specifically, the size of a defect that increases the probability of an uncorrectable error when a typical error correction process is used is approximately 200 µm. However, in this preferred embodiment, the light transmission layer 3 of the optical recording medium subject to inspection is thin (approximately 100 µm), so most of the optical storage media having internal defects of a length in a direction parallel to the optic axis of the laser beam (direction perpendicular to the surface of the optical recording medium) are eliminated in Step S4. Accordingly, in this preferred embodiment, it is possible to set the second critical value to a value larger than the size of defects at which the probability of an uncorrectable error increases.

Specifically, the second critical value is preferably selected within the range from approximately 30 µm to approximately 500 µm. If the second critical value is set to less than 30 µm, then the presence of internal defects of a level that does not actually affect the playback and/or recording of data will cause optical recording media to be handled as defective, leading to the risk of excessively degrading yield. If the second critical value is set to a value in excess of 500 µm, then there is a risk that optical recording media containing defects of a level that cannot be corrected by the error correction process being handled as good (non-defective). In addition, the second critical value is preferably selected within a range from approximately 40 µm to approximately 300 µm. If the first critical value is selected within this range, it is possible to effectively prevent the occurrence of uncorrectable errors while also improving yield. Moreover, it is particularly preferable to select the second critical value within a range from approximately 50 µm to approximately 200 µm. If the second critical value is selected within this range, it is possible to prevent the occurrence of uncorrectable errors even more effectively while also improving yield even more.

Note that it is most preferable for the second critical value to be set essentially identical to the size of a defect that increases the probability of errors that are uncorrectable by the error correction process, so it is most preferably set to approximately 200 µm in this preferred embodiment.

On the other hand, the third critical value is preferably selected within the range from approximately 10 µm to approximately 220 µm. If the third critical value is set to less than 10 µm, then there is the risk of excessively degrading yield. If the third critical value is set to a value in excess of 220 µm, then there is a risk of optical recording media containing defects of a level that cannot be corrected by the error correction process being handled as good (non-defective. In addition, the third critical value is preferably selected within a range from approximately 30 µm to approximately 200 µm. If the third critical value is selected within this range, it is possible to effectively prevent the occurrence of uncorrectable errors while also improving yield. Moreover, it is particularly preferable to select the second critical value within a range from approximately 50 µm to approximately 100 µm. If the third critical value is selected within this range, it is possible to prevent the occurrence of uncorrectable errors even more effectively while also improving yield even more.

Note that it is most preferable for the third critical value to be set essentially identical to the thickness of the light transmission layer 3, so it is most preferably set to approximately 100 µm in this preferred embodiment. In addition, the third critical value may be set larger than the thickness of the light transmission layer 3 in consideration of yield.

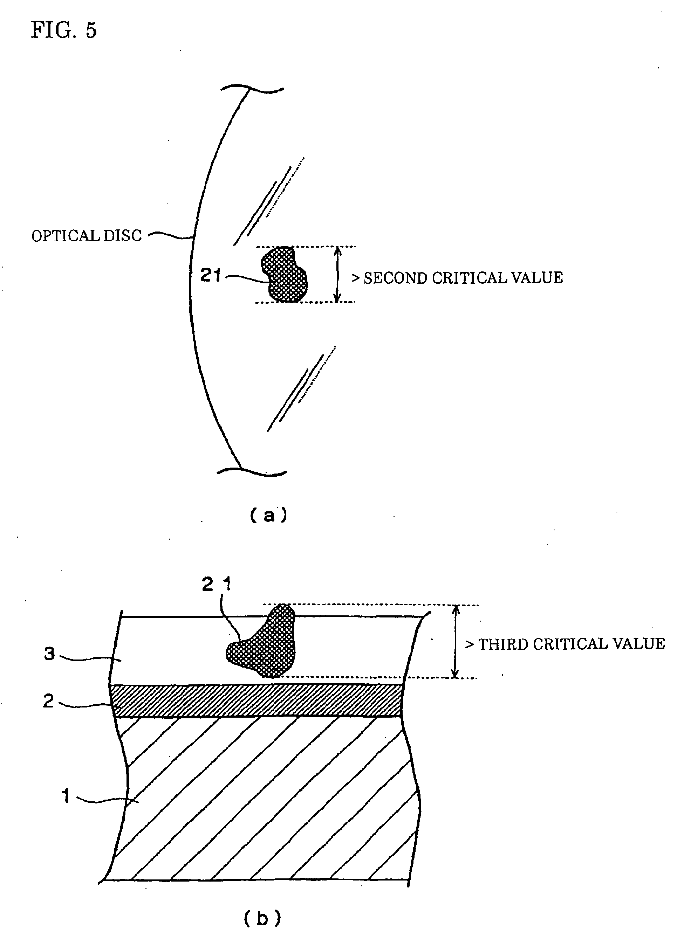

Figure 5(a) is a partial top view of an optical recording medium which has an internal defect 21, while Figure 5(b) is a partial cross section thereof.

With the internal defect 21 shown in Figures 5(a) and (b), the maximum value of its length in a direction perpendicular to the optic axis of laser beam exceeds the second critical value and also the maximum value of its length in a direction parallel to the optic axis of laser beam exceeds the third critical value. Accordingly, an optical recording medium having such an internal defect 21 is determined to be defective in Step S6.

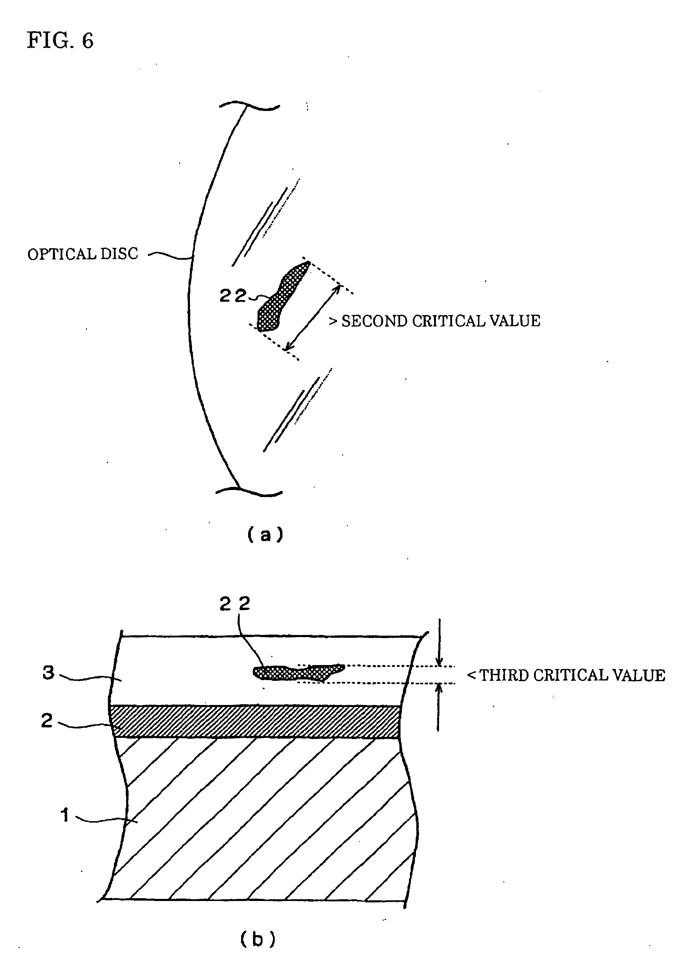

Figure 6(a) is a partial top view of an optical recording medium which has an internal defect 22, while Figure 6(b) is a partial cross section thereof.

With the internal defect 22 shown in Figures 6(a) and (b), the maximum value of its length in a direction perpendicular to the optic axis of laser beam exceeds the second critical value, but the maximum value of its length in a direction parallel to the optic axis of laser beam does not exceed the third critical value. Accordingly, an optical recording medium having such an internal defect 22 is also determined to be defective in Step S6.

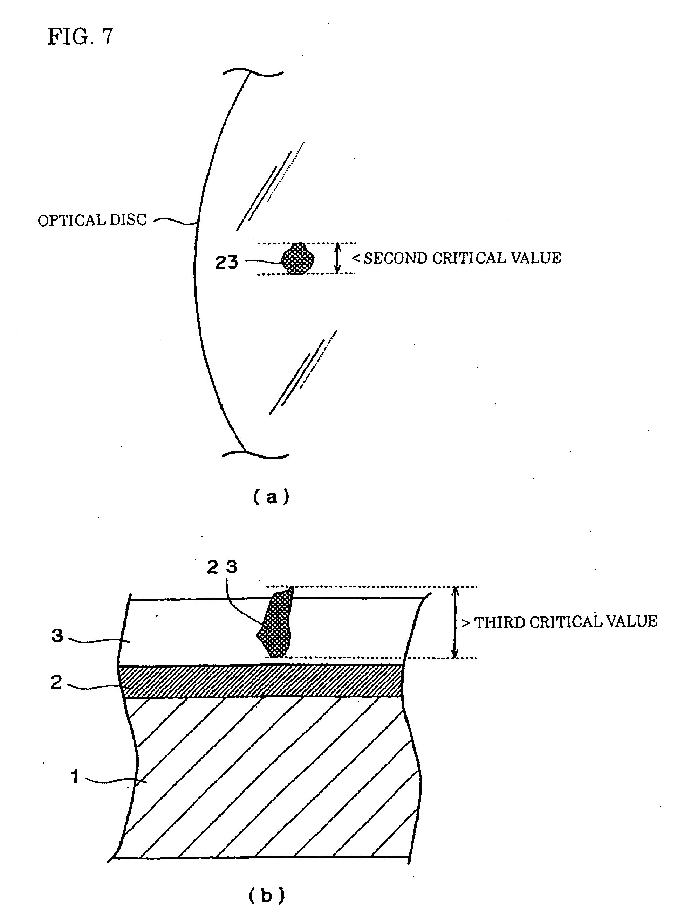

Figure 7(a) is a partial top view of an optical recording medium which has an internal defect 23, while Figure 7(b) is a partial cross section thereof.

With the internal defect 23 shown in Figures 7(a) and (b), the maximum value of its length in a direction perpendicular to the optic axis of laser beam does not exceed the second critical value, but the maximum value of its length in a direction parallel to the optic axis of laser beam exceeds the third critical value. An optical recording medium having such an internal defect 23 is also determined to be defective in Step S6.

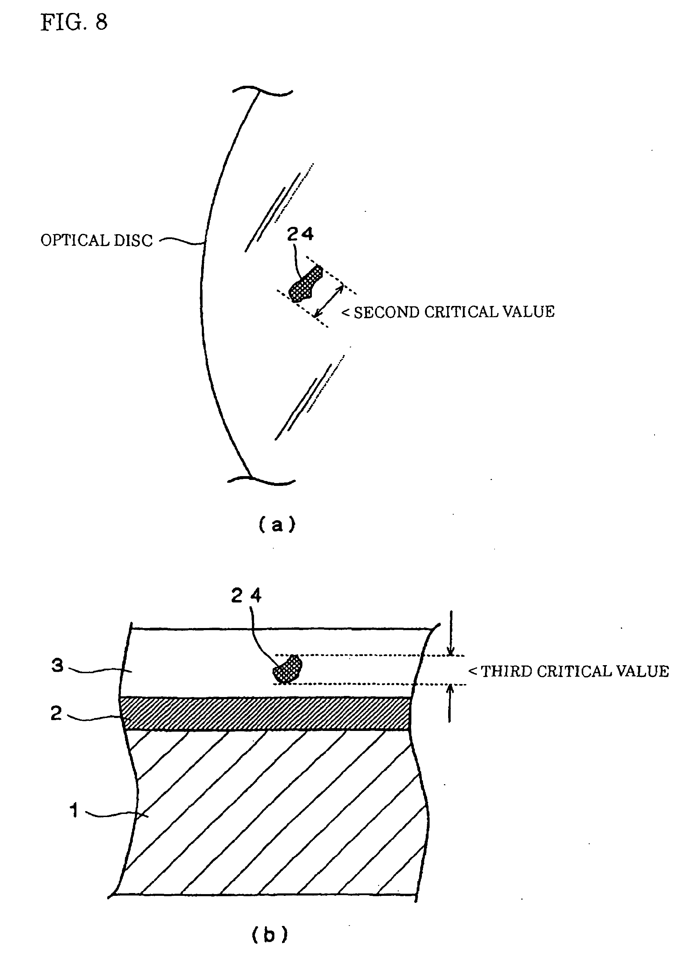

Figure 8(a) is a partial top view of an optical recording medium which has an internal defect 24, while Figure 8(b) is a partial cross section thereof.

With the internal defect 24 shown in Figures 8(a) and (b), the maximum value of its length in a direction perpendicular to the optic axis of laser beam does not exceed the second critical value, and the maximum value of its length in a direction parallel to the optic axis of laser beam does exceed the third critical value. Such an internal defect 24 does not become the basis for determining that this optical recording medium is defective in Step S6.

In this manner, the critical values for the size of internal defects in Step S6 are defined separately in each of the two directions, so the critical value for the length in a direction perpendicular to the optic axis of a laser beam (the second critical value) is set to be longer than the critical value for the length in a direction parallel to the optic axis of the laser beam (the third critical value). For this reason, it is possible to effectively eliminate defective discs without greatly reducing yield.

As described above, with this preferred embodiment, in the inspection process, an inspection is performed to determine the presence of any protruding defects where the height of the protruding part exceeds a first critical value (Step S4), so it is possible to effectively eliminate defective discs with a high probability of a protruding defect coming into contact with (crashing into) the objective lens or the support which supports it.

In addition, with this preferred embodiment, in the internal defect inspection (Step S6), the determination is performed using the second and third critical values having mutually different values, so it is possible to effectively eliminate defective discs that have internal defects that may give rise to errors on a level that cannot be corrected in the error correction process without greatly reducing yield.

Here follows a description of another example of an inspection process.

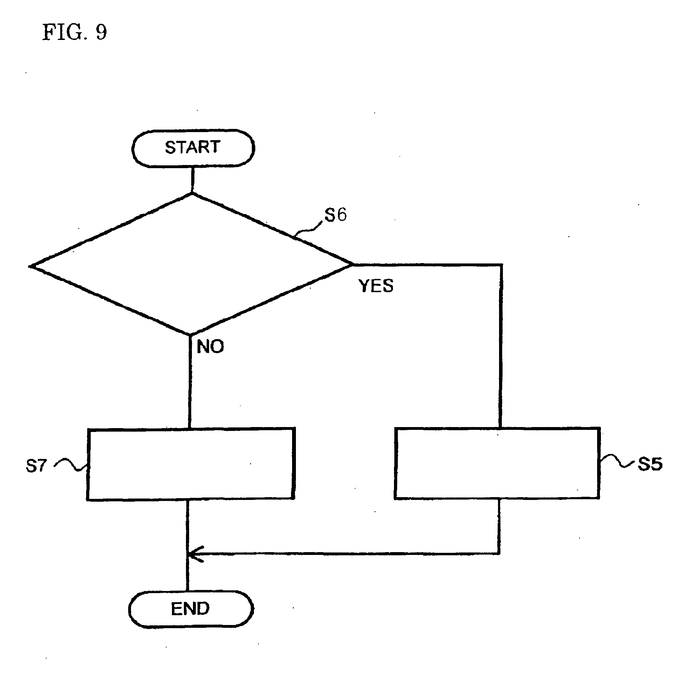

Figure 9 is a schematic flowchart illustrating another preferable inspection process, which can be performed instead of the inspection process described with reference to Figure 3.

As shown in Figure 9, in the inspection process in this example, the inspection for protruding defects (Step S4) is omitted from the inspection process illustrated in Figure 3. Even when such an inspection process is used, the critical values for the size of internal defects are defined separately in each of the two directions, so the elimination of defective discs can be performed effectively without greatly decreasing yield. Note that if the inspection process is simplified in this manner, the elimination of defective discs caused only by protruding defects is performed, but since the critical values for the size of internal defects are defined separately in each of the two directions in Step S6, it is possible to eliminate a large portion of the optical recording media containing large projecting defects that would be determined to be defective discs in Step S4.

Note that in this example also, it is most preferable for the second critical value to be set essentially identical to the thickness of the light transmission layer 3, but in this example, no inspection for protruding defects is performed, so the second critical value is also preferably set larger than the thickness of the light transmission layer 3.

When the inspection process illustrated in Figure 9 is used instead of the inspection process illustrated in Figure 3 in this manner, it is possible to eliminate defective discs without greatly decreasing yield.

Here follows a description of still another example of an inspection process.

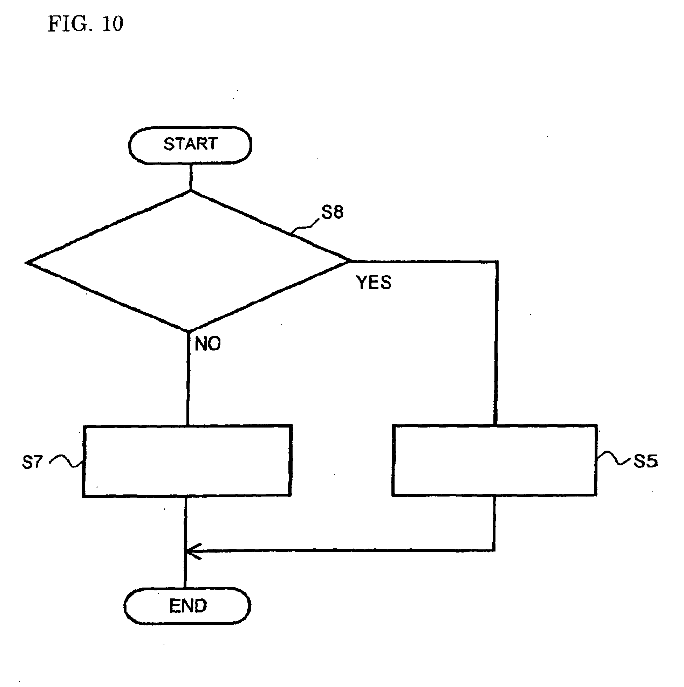

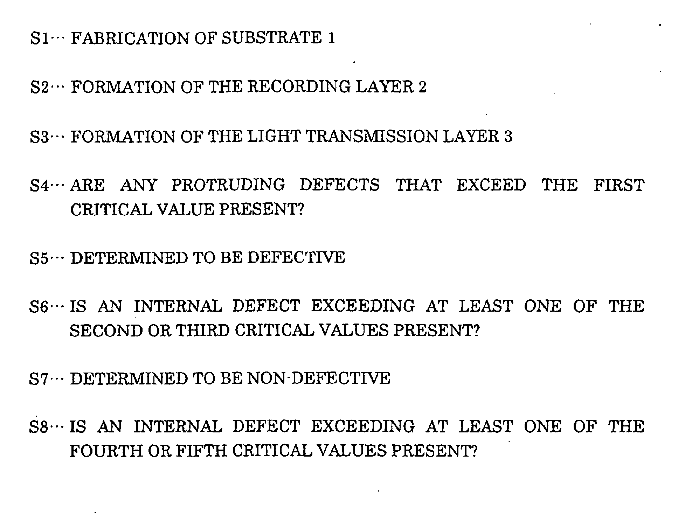

Figure 10 is a schematic flowchart illustrating another preferable inspection process, which can be performed instead of or in addition to the inspection process described with reference to Figure 3.

As shown in Figure 10, in this inspection process, an inspection is performed to determine the presence of any protruding defects at least partially protruding from the light transmission layer 3 where the protruding defect exceeds a fourth critical value or fifth critical value (Step S8). In the event that an internal defect exceeding at least one of the fourth or fifth critical value is determined to be present as a result of this inspection, that optical recording medium is handled as defective (Step S5), but if it is determined that no internal defects exceeding at least one of the fourth or fifth critical values are present, that optical recording medium is handled as non-defective (Step S7). Note that the inspection for protruding defects in Step S8 may be performed using a surface shape measurement microscope, although this is not a particular limitation.

Here, the fourth critical value is defined to be a critical value for the height of the protruding part of the protruding defect. On the other hand, the fifth critical value is defined similarly to be the length of the protruding part of the protruding defect, being the critical value for the length in a direction perpendicular to the optic axis of the laser beam (a direction parallel to the surface of the optical recording medium). In this manner, the critical values for the size of internal defects in this inspection process are defined separately in each of the two directions.

In the same manner as in the first critical value described above, the fourth critical value is preferably selected within the range from approximately 1 µm to approximately 120 µm, more preferably selected within a range from approximately 2 µm to approximately 100 µm, and particularly preferably selected within a range from approximately 5 µm to approximately 50 µm. In addition, in the same manner as in the second critical value described above, the fifth critical value is preferably selected within the range from approximately 30 µm to approximately 500 µm, more preferably selected within a range from approximately 40 µm to approximately 300 µm, and particularly preferably selected within a range from approximately 50 µm to approximately 200 µm.

In this manner, the critical values for the size of the protruding portions in this inspection process are defined separately in each of the two directions (Step S8), so it is possible to effectively eliminate defective discs with a high probability of a protruding defect coming into contact with (crashing into) the objective lens or the support which supports it, while also effectively eliminating defective discs having protruding defects that may give rise to errors on a level that cannot be corrected in the error correction process without greatly reducing yield.

The present invention is in no way limited to the aforementioned embodiment, but rather various modifications are possible within the scope of the invention as recited in the claims, and these are naturally included within the scope of the invention.

For example, in the aforementioned preferred embodiments, preferable ranges are identified for the value to be selected as the first critical value and this value is identified based on the working distance, but the present invention is in no way limited thereto. Accordingly, in the event that the working distance is different than in the aforementioned preferred embodiment, the first critical value may be selected appropriately depending thereon.

In addition, in the aforementioned preferred embodiments, preferable ranges are identified for the values to be selected as the second and third critical values and these values are identified based on the size of an internal defect that may give rise to errors on a level that cannot be corrected in the error correction process, but the present invention is in no way limited thereto. Accordingly, in the event that the size of an internal defect that may give rise to errors on a level that cannot be corrected in the error correction process is different than in the aforementioned preferred embodiment, the second and third critical values may be selected appropriately depending thereon.

Moreover, in the film formation process in the aforementioned preferred embodiment, the recording layer 2 and light transmission layer 3 are formed upon the substrate 1 in this order, but conversely, the recording layer 2 and substrate 1 may be formed upon the light transmission layer 3 in this order.

In addition, in the inspection process in the aforementioned preferred embodiment, the inspection for internal defects (Step S6) is performed after the inspection for protruding defects (Step S4) is complete, but the order in which they are performed may be reversed.

As described above, with the present invention, defective discs, for example, defective discs that have protruding defects protruding greatly from the surface of the light transmission layer may be effectively eliminated without greatly decreasing yield. Here, protrusions from the surface of the light transmission layer are a problem particularly in optical recording media where the working distance at the time of recording/playback is set to be short, so the present invention is particularly suited to optical recording media with a thin light transmission layer and a method of their manufacture.

## Claims

1. A method of manufacturing an optical recording medium comprising at least a light transmission layer and a recording layer whereby data is played back and/or recorded by projecting a laser beam onto said recording layer via said light transmission layer, wherein the optical recording medium manufacturing method comprises at least an inspection process for detecting internal defects contained within said light transmission layer, and in said inspection process, different values are set as the critical value for said internal defects in a first direction and as the critical value in a second direction different from said first direction.

2. A method of manufacturing an optical recording medium in accordance with Claim 1, wherein said first direction is a direction substantially perpendicular to the optical axis of said laser beam, and said second direction is a direction substantially parallel to the optical axis of said laser beam.

3. A method of manufacturing an optical recording medium in accordance with Claim 2, wherein the critical value in said first direction is greater than the critical value in said second direction.

4. A method of manufacturing an optical recording medium in accordance with Claim 3, wherein the critical value in said first direction is selected within a range from approximately 30 µm to approximately 500 µm.

5. A method of manufacturing an optical recording medium in accordance with Claim 4, wherein the critical value in said first direction is selected within a range from approximately 40 µm to approximately 300 µm.

6. A method of manufacturing an optical recording medium in accordance with Claim 5, wherein the critical value in said first direction is selected within a range from approximately 50 µm to approximately 200 µm.

7. A method of manufacturing an optical recording medium in accordance with Claim 6, wherein the critical value in said first direction is approximately 200 µm.

8. A method of manufacturing an optical recording medium in accordance with Claim 3, wherein the critical value in said second direction is selected within a range from approximately 10 µm to approximately 220 µm.

9. A method of manufacturing an optical recording medium in accordance with Claim 8, wherein the critical value in said second direction is selected within a range from approximately 30 µm to approximately 200 µm.

10. A method of manufacturing an optical recording medium in accordance with Claim 9, wherein the critical value in said second direction is selected within a range from approximately 50 µm to approximately 100 µm.

11. A method of manufacturing an optical recording medium in accordance with Claim 10, wherein the critical value in said second direction is approximately 100 µm.

12. A method of manufacturing an optical recording medium in accordance with Claim 11, wherein the thickness of said light transmission layer is approximately 100 µm.

13. A method of manufacturing an optical recording medium in accordance with Claim 3, wherein the critical value in said second direction is larger than the thickness of said light transmission layer.

14. An optical recording medium comprising at least a light transmission layer and a recording layer whereby data is played back and/or recorded by projecting a laser beam onto said recording layer via said light transmission layer, wherein the optical recording medium is such that the length in a first direction of a first largest internal defect that has the maximum length in that direction of all of the internal defects contained within said light transmission layer is longer than the length in a second direction of a second largest internal defect that has the maximum length in that direction of all of the internal defects contained within said light transmission layer.

15. An optical recording medium in accordance with Claim 14, wherein said first direction is a direction substantially perpendicular to the optical axis of said laser beam, and said second direction is a direction substantially parallel to the optical axis of said laser beam.

16. An optical recording medium in accordance with Claim 15, wherein the length in said first direction of said first largest internal defect is in a range from approximately 30 µm to approximately 500 µm.

17. An optical recording medium in accordance with Claim 16, wherein the length in said first direction of said first largest internal defect is in a range from approximately 40 µm to approximately 300 µm.

18. An optical recording medium in accordance with Claim 17, wherein the length in said first direction of said first largest internal defect is in a range from approximately 50 µm to approximately 200 µm.

19. An optical recording medium in accordance with Claim 15, wherein the length in said second direction of said second largest internal defect is in a range from approximately 10 µm to approximately 220 µm.

20. An optical recording medium in accordance with Claim 19, wherein the length in said second direction of said second largest internal defect is in a range from approximately 30 µm to approximately 200 µm.

21. An optical recording medium in accordance with Claim 20, wherein the length in said second direction of said' second largest internal defect is in a range from approximately 50 µm to approximately 100 µm.

22. An optical recording medium in accordance with Claim 15, wherein the thickness of said light transmission layer is approximately 100 µm.

23. An optical recording medium comprising at least a light transmission layer and a recording layer whereby data is played back and/or recorded by projecting a laser beam onto said recording layer via said light transmission layer, wherein the optical recording medium is such that the length tolerance for an internal defect contained within said light transmission layer is longer in a first direction than in a second direction different from said first direction.

24. An optical recording medium in accordance with Claim 23, wherein said first direction is a direction substantially perpendicular to the optical axis of said laser beam, and said second direction is a direction substantially parallel to the optical axis of said laser beam.

25. A method of manufacturing an optical recording medium comprising at least a light transmission layer and a recording layer whereby data is played back and/or recorded by projecting a laser beam onto said recording layer via said light transmission layer, wherein the optical recording medium manufacturing method comprises at least a protruding defect inspection process for detecting protruding defects that adhere to said light transmission layer or that protrude from said light transmission layer.

26. A method of manufacturing an optical recording medium in accordance with Claim 25, wherein the thickness of said light transmission layer is 50-150 µm.

27. A method of manufacturing an optical recording medium in accordance with Claim 25, wherein the critical value for the height of protruding defects is selected within a range from approximately 1 µm to approximately 120 µm.

28. A method of manufacturing an optical recording medium in accordance with Claim 27, wherein said critical value for height is selected within a range from approximately 2 µm to approximately 100 µm.

29. A method of manufacturing an optical recording medium in accordance with Claim 28, wherein said critical value for height is selected within a range from approximately 5 µm to approximately 50 µm.

30. An optical recording medium comprising at least a light transmission layer and a recording layer whereby data is played back and/or recorded by projecting a laser beam onto said recording layer via said light transmission layer, wherein the optical recording medium is such that, among the protruding defects adhering to said light transmission layer or protruding from said light transmission layer, the largest protruding defect, whose height from said light transmission layer is largest, has a height between approximately 1 µm and approximately 120 µm.

31. An optical recording medium in accordance with Claim 30, wherein the thickness of said light transmission layer is 50-150 µm.

32. A method of manufacturing an optical recording medium comprising at least a light transmission layer and a recording layer whereby data is played back and/or recorded by projecting a laser beam onto said recording layer via said light transmission layer, wherein the optical recording medium manufacturing method comprises at least a protruding defect inspection process for detecting protruding defects that adhere to said light transmission layer or that protrude from said light transmission layer, and in said inspection process, different values are set as the critical value for said protruding defects in a first direction and as the critical value in a second direction different from said first direction.

33. A method of manufacturing an optical recording medium in accordance with Claim 32, wherein the thickness of said light transmission layer is 50-150 µm.

34. A method of manufacturing an optical recording medium in accordance with Claim 32, wherein said first direction is a direction substantially perpendicular to the optical axis of said laser beam, and said second direction is a direction substantially parallel to the optical axis of said laser beam.

35. A method of manufacturing an optical recording medium in accordance with Claim 34, wherein the critical value in said first direction is larger than the critical value in said second direction.
